# EUROPÄISCHE PATENTSCHRIFT

(11) **EP 0 612 588 B1**
(45) Veröffentlichungstag und Bekanntmachung des Hinweises auf die Patenterteilung: **23.07.1997**
(21) Anmeldenummer: 94102095.0
(22) Anmeldetag: 11.02.1994
(51) Int. Cl.: B25F 5/00, B25B 21/00, B23B 45/00

(54) **Schaltvorrichtung für Elektrowerkzeuge**
Control device for electric tools
Dispositif de commande pour outils électriques

(30) Priorität: 26.02.1993 DE 4305965
(43) Veröffentlichungstag der Anmeldung: 31.08.1994
(73) Patentinhaber: Kress-elektrik GmbH + Co. Elektromotorenfabrik, D-72403 Bisingen (DE)
(72) Erfinder: Kress, Willy, D-72403 Bisingen (DE); Binder, Alfred, D-72403 Bisingen (DE)
(74) Vertreter: Otte, Peter, Dipl.-Ing.

(56) Entgegenhaltungen:
- EP-A- 0 221 009
- EP-A- 0 463 416
- DE-A- 2 728 961
- DE-A- 3 627 869
- DE-U- 9 302 806

## Beschreibung

### Stand der Technik

Die Erfindung geht aus von einem Elektrowerkzeug nach dem Oberbegriff des Anspruchs 1.

Bei einem bekannten Elektrowerkzeug dieser Art, nämlich einem Bohrhammer mit elektropneumatischem Schlagwerk (EP-A-221 009) läßt sich der Drehantrieb für die Werkzeugspindel mit Hilfe einer speziellen axial verschiebbaren Kupplungsmuffe bei aufrechterhaltenem Schlagantrieb ausrücken, und zwar durch Betätigung eines außen am Gehäuse zugänglichen Drehgriffs, der über einen Exzenterstift die Kupplungsmuffe verschiebt, die axial gleitverschieblich in Nuten eines Führungsrohrs für den Schlagantrieb gelagert ist. Wird die Kupplungsmuffe ausgerückt, dann findet sich der Drehgriff in einer solchen Abstandsposition zum Gehäuse, daß er durch weiteres Eindrücken so verstellt werden kann, daß der Exzenterstift, der ursprünglich zur axialen Verschiebung der Kupplungsmuffe gedient hat, nunmehr in Rastöffnungen derselben einrücken kann, wodurch diese und damit gleichzeitig das in die Werkzeugspindel übergehende Führungsrohr drehfest arretiert werden.

Die Sicherung solcher drehfesten Arretierfunktionen für die Ausgangswelle oder Werkzeugspindel bei Elektrohandwerkzeugen, insbesondere bei Bohr- oder Schlaghämmern, ist deshalb erwünscht, weil hierdurch bei weiterlaufendem Schlagwerk Meißelfunktionen realisiert werden können und gleichzeitig sichergestellt wird, daß sich ein in der Werkzeugaufnahme des Handwerkzeugs eingespannter Meißel beim Meißeln nicht verdrehen kann.

So bewirkt bei einem bekannten Bohr- oder Schlaghammer (DE 36 27 869 A1) ein Kupplungsschiebeglied in Form eines Steuerrings, welches zusätzlich noch weitere Funktionen efüllt, in einer ersten Eingriffsposition mit einem Zahnkranz den Drehantrieb und in mindestens einer zweiten, aus der Antriebsverbindung mit der Antriebswelle gelösten Position (Meißelfunktion) eine drehfeste Arretierung der Ausgangsspindel mit Hilfe eines gehäusestationären Arretierglieds, nämlich einem in einem Gehäusebereich eingelassenen Zahnrad, bei aufrechterhaltenem Schlagantrieb. Geschaltet werden die unterschiedlichen Funktionen mit Hilfe eines von außen zugänglichen manuell zu betätigenden Drehknopfes, der das Kupplungsschiebeglied in der Längsachse der Werkzeugspindel in verschiedene Rastpositionen verschiebt, wobei dann jeweils unterschiedliche Funktionen realisiert werden. Dabei sind insgesamt vier verschiedene Betriebszustände möglich, nämlich reiner Schlagantrieb bei abgeschaltetem Drehantrieb, Zuschaltung des Drehantriebs sowie in einer weiteren Stellung Fangen des Schlägers des Schlagantriebs mittels Halteelementen, so daß ein reiner Drehantrieb resultiert, und schließlich in einer vierten Stellung (Spindellock) der Schlagbetrieb mit drehfest blockiertem Werkzeug, wobei in diesem Fall der Steuerring ganz nach vorn in Richtung auf die Werkzeugaufnahme geschoben ist, wodurch eine nur für diesen Zweck erforderliche Verzahnung in das gehäusefeste Zahnrad eingreift.

Eine solche Umschaltvorrichtung kann deshalb als kompliziert angesehen werden, weil das Kupplungsschiebeglied insgesamt vier unterschiedliche Funktionen zu erfüllen hat und lediglich für die Spindellock-Position zwei zusätzliche Zahnräder erforderlich sind, ein gehäusestationäres Zahnrad und das mit diesem in Wirkverbindung gelangende Zahnrad am Kupplungsschiebeglied.

In ähnlicher Weise ist bei einem bekannten Bohrhammer mit arretierbarem Werkzeughalter (DE 27 28 961 A1) eine Lockfunktion realisiert, indem ein mit dem Werkzeughalter drehfest verbundenes Kupplungsteil durch axiales Verschieben mittels eines Stellorgans in eine mit dem Antriebsrad kuppelnde Stellung, in eine Leerdrehstellung und in eine gegenüber dem Gehäuse des Bohrhammers arretierbare Stellung gebracht werden kann, wobei das Kupplungsteil in dieser letzten Position zur Arretierung an der dem Antriebsrad abgewandten Stirnseite Vorsprünge bzw. Ausnehmungen aufweist, die in Eingriff mit entsprechenden gehäuseseitigen Vorsprüngen bzw. Ausnehmungen bringbar sind. Auch bei dieser Ausführungsform übernimmt das Kupplungsteil die zusätzliche Lockfunktion.

Es kann allgemein davon ausgegangen werden, daß solche Lockfunktionen bei drehangetriebenen Elektrohandwerkzeugen zukünftig nicht mehr allein oder überwiegend bei Bohrhammern oder sonstigen Elektrowerkzeugen mit vergleichbarer Funktion eingesetzt werden, sondern ganz allgemein eine zusätzliche Schaltfunktion bei Elektrohandwerkzeugen bilden, um beispielsweise das Bohrfutter problemlos von der Spindel zu lösen oder allgemein um Werkzeuge in der Werkzeugaufnahme schlüssellos einspannen zu können.

Daher liegt der vorliegenden Erfindung die Aufgabe zugrunde, ein Elektrowerkzeug mit einer einfach aufgebauten Schaltvorrichtung speziell für Elektrohandwerkzeuge zu schaffen, die eine sichere Spindelarretierung (Lockfunktion) gewährleistet und dabei gleichzeitig sicherstellt, daß unter allen Umständen bei realisierter Lockfunktion die Antriebsverbindung Elektromotor/Werkzeugspindel sich in der Leerlaufposition befindet.

### Vorteile der Erfindung

Die Erfindung löst diese Aufgabe mit den Merkmalen des Anspruchs 1 und hat den Vorteil, daß ohne größeren Aufwand eine formschlüssige und kräftige Spindelarretierung, also die sogenannte Lockfunktion möglich ist, ohne daß einerseits ein Kupplungsglied, ein Steuerring oder ein sonstiges beliebiges Getriebeteil diese Funktion zusätzlich bei dann notwendigerweise komplizierterem Aufbau übernehmen muß, andererseits aber dennoch sichergestellt ist, daß der Drehantrieb des mit einer solchen Schaltvorrichtung ausgerüsteten Elektrowerkzeugs sicher unterbrochen ist, also eine Blockierung des antreibenden Elektromotors ausgeschlossen ist.

Von Vorteil ist ferner, daß die Spindelblockierung, also die Lockfunktion, immer dann automatisch vom Werkzeug realisiert wird, wenn an einem äußeren Betätigungselement oder Stellglied, bevorzugt einem Drehknopf, in eine Leerlaufposition geschaltet wird. Aus dieser Leerlaufposition läßt sich dann mühelos in jeweilige Getriebegangverbindungen weiterschalten, wobei die Lockfunktion außer Kraft tritt. Andererseits ist in diesem Zusammenhang aber ein versehentliches Weiterdrehen in eine aktive Drehantriebsposition ausgeschlossen, weil zum Einschalten eines Ganges bewußt ein Schieber am Drehknopf zurückgezogen werden muß, um die Lockfunktion zu lösen. Erst danach ist ein Weiterschalten in eine erste oder auch eine zweite Gangposition möglich, so daß die Schaltvorrichtung vollständig gegen ein versehentliches Einschalten von zwei Funktionen, also Spindelarretierung und Einschalten eines Ganges, gesichert ist.

Dabei ist der Aufwand für die Realisierung der Lockfunktion besonders gering, weil zur Spindelarretierung lediglich ein zungenartiger Schieber durch eine Axialbewegung so weit nach vorn gedrückt wird, daß er in Halteöffnungen eines Bundes oder Schürze an der Werkzeugspindel oder Ausgangswelle des Elektrohandwerkzeugs eingreift und diese daher bei eigener stationärer Lagerung im Werkzeuggehäuse, vorzugsweise an einer Außenfläche eines Getriebegehäuses (Aludruckgußteil) gegen Verdrehung festhält.

Die Erfindung läßt sich mit besonderem Vorteil bei solchen Elektrohandwerkzeugen einsetzen, die in Form einer Modulbauweise zusammengesetzt sind, bei denen ein in sich abgeschlossener vorderer Getriebekopfteil an ein hinteres Motorgehäuseteil, gegebenenfalls mit sich an dieses anschließendem Handgriff, angesetzt wird. Daher zeigen die im folgenden zu erläuternden Figuren auch nur lediglich den Getriebekopfteil mit zugehörigem Außengehäuse, üblicherweise aus Kunststoff, also den Bereich, bei welchem die Erfindung zum Einsatz kommt.

Durch die in den Unteransprüchen aufgeführten Maßnahmen sind vorteilhafte Weiterbildungen und Verbesserungen der Erfindung möglich. Besonders vorteilhaft ist die Ausbildung des das Arretierglied bewegenden Schiebers am äußeren Drehgriff als federvorgespanntes Teilsegment des Drehgriffs und die zugehörige, den Drehgriff aufnehmende runde Gehäuseöffnung mit einem Ausschnitt oder einer Ausnehmung genau an der Stelle, an welcher der Schieber sich unter Mitnahme des Arretierglieds in die Lockfunktion bewegen kann, so daß es das Gehäuse selbst ist, welches die radiale Schieberbewegung freigibt oder entweder eben blockiert, so daß trotz seiner Federvorspannung der Schieber in allen anderen Drehwinkelpositionen des Drehgriffs nicht aus seiner zurückgezogenen Stellung im Drehgriff heraustreten kann.

### Zeichnung

Ausführungsbeispiele der Erfindung sind in der Zeichnung dargestellt und werden in der nachfolgenden Beschreibung näher erläutert. Es zeigen:
- Fig. 1: einen Längsschnitt lediglich durch den vorderen Getriebekopfbereich eines Elektrohandwerkzeugs von an sich grundsätzlich beliebiger Form und Ausgestaltung, wobei die die Spindelarretierung bewirkenden Komponenten einem am oberen Teilgehäuseteil erkennbaren Drehgriff oder Drehknopf zugeordnet sind, und
- Fig. 2: eine Draufsicht auf den in Fig. 1 gezeigten Getriebekopfmodul, wobei sich der Drehgriff in der Schaltwinkelposition oder Schaltstellung für den 1. Gang befindet (keine Lockfunktion);
- Fig. 3: zeigt die gleiche Schnittdarstellung der Fig. 1 mit dem Unterschied, daß sich im Inneren des Getriebekopfes Getriebeteile in einer zweiten Gangposition befinden, wobei
- Fig. 4: die Draufsicht auf den Getriebekopfmodul der Fig. 3 zeigt, wodurch auch die jeweils geänderte Drehgriffschaltstellung erkennbar ist; die
- Fig. 5 und 6: zeigen den Zeichnungspaarungen der Figuren 1 und 2 bzw. 3 und 4 wiederum vergleichbare Schnitt- und Draufsichtdarstellungen, diesmal jedoch mit Aktivierung der Lockfunktion für die Werkzeugspindel bzw. Ausgangswelle des Elektrohandwerkzeugs;
- Fig. 7: zeigt eine Draufsicht auf den Getriebekopfmodul der Fig. 1 mit teilweise weggenommenen Komponenten, wodurch das zungenartig sich nach vorn erstreckende Arretierglied erkennbar ist, und
- Fig. 8: zeigt zum besseren Verständnis eine Ansicht von unten lediglich auf den Drehgriff mit von diesem aufgenommenem Schieber für die Lockfunktion.

### Beschreibung der Ausführungsbeispiele

Der Grundgedanke vorliegender Erfindung besteht darin, in einen beispielsweise einer Gangumschaltung eines Elektrohandwerkzeugs dienenden Drehgriff einen Schieber für die Lockfunktion der Spindel zu integrieren, und zwar derart, daß die Lockfunktion durch Schieberbetätigung nur dann möglich ist, wenn sich der Drehgriff in einer Drehposition oder Schaltstellung befindet, die dem Leerlauf des Elektrohandwerkzeugs entspricht, in welcher also eine getriebemäßige Verbindung zwischen dem antreibenden Elektromotor und der Werkzeugaufnahme bzw. der Spindel des Werkzeugs unterbrochen ist. In dieser Lockfunktion können daher Manipulationen am Werkzeug, beispielsweise Auswechseln der Werkzeugaufnahme oder Festspannen von Werkzeugen oder sonstige Arbeiten vorgenommen werden, die eine drehfeste Arretierung der Werkzeugspindel erforderlich machen oder jedenfalls für wünschenswert erachten, wobei der antreibende Elektromotor ausgeschaltet sein kann oder aber auch weiterlaufen kann.

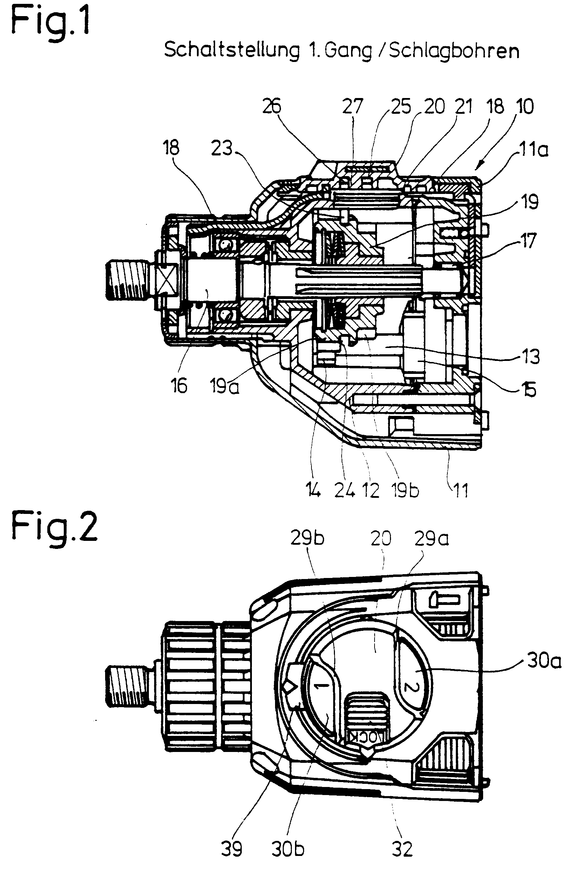

Das dargestellte Ausführungsbeispiel bezieht sich speziell auf eine 2-Gang-Werkzeugmaschine, wobei lediglich deren Getriebekopfmodul dargestellt ist, an welchen der Motorteil in geeigneter Weise angeflanscht ist. Der Getriebekopfmodul 10 der Fig. 1 umfaßt ein äußeres, üblicherweise aus Kunststoff bestehendes und vorzugsweise topfförmiges Gehäuse 11, in welches ein inneres, bei dem dargestellten Ausführungsbeispiel in sich abgeschlossenes eigenes Getriebegehäuse 12, vorzugsweise als Aludruckgußteil ausgebildet, aufgenommen ist. Das Getriebegehäuse 12 beherbergt zur Gangumschaltung eine von einem nicht dargestellten, an das Getriebegehäuse mit seiner Ausgangswelle anzuflanschenden Elektromotor angetriebene Vorgelegewelle 13 mit zwei auf dieser sitzenden Zahnrädern 14 und 15.

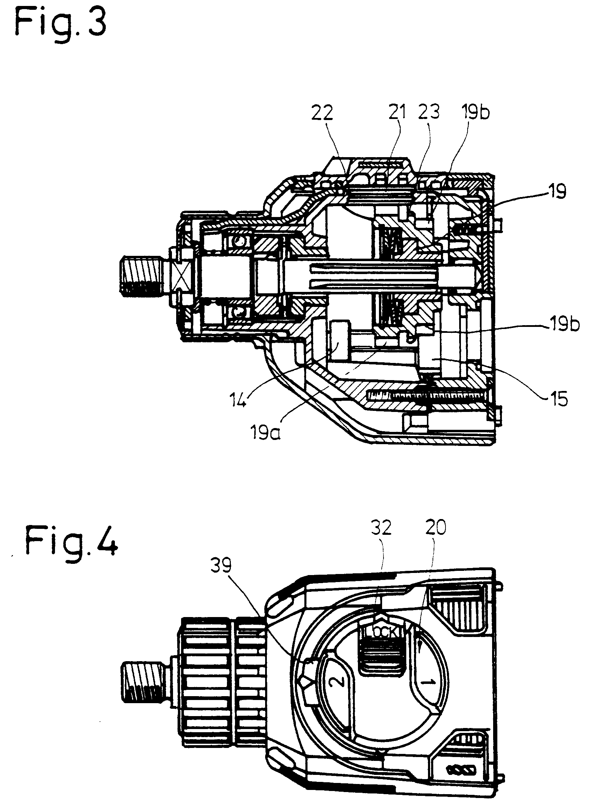

Auf der Ausgangswelle oder Spindel 16 des Elektrohandwerkzeugs bzw. hier des Getriebeteilmoduls, die beidseitig einmal über ein Nadellager 17 sowie über ein Kugellager 18 im Getriebegehäuse 12 gelagert ist, sitzt ein Zahnradblock 19 drehfest beispielsweise über Keilnuten gelagert, so daß durch die entsprechende Axialverschiebbarkeit des Zahnradblocks 19 mit seinen beiden Zahnrädern 19a und 19b die Gangumschaltung möglich ist, indem der Zahnradblock 19 entweder in die in Fig. 1 gezeigte vordere Schaltposition verschoben ist, in welcher das größere Zahnrad 19a des Zahnradblocks 19 mit dem Vorgelegezahnrad 14 kämmt, oder, entsprechend der Darstellung der Fig. 3, sich in der rückwärtigen Schaltposition für den 2. Gang befindet, in welchem das kleinere Zahnrad 19b mit dem größeren Vorgelegezahnrad 15 kämmt. An sich kommt es auf diese Gegebenheiten bei der Realisierung der Erfindung nicht entscheidend an - hierauf wird lediglich aus Gründen eines besseren Verständnisses für die Gesamtfunktion eingegangen. Allerdings eignet sich die dargestellte Ausführungsform der Erfindung besonders gut für die Realisierung einer Lockfunktion der Werkzeugspindel in Verbindung mit einer solchen 2-Ganggetriebe-Umschaltung, wobei zwischen den beiden Antriebs-Getriebestellungen eine Leerlaufposition vom Zahnradblock 19 eingenommen werden kann. Es versteht sich natürlich, daß auch bei einer 1-Gang-Maschine eine solche, im folgenden zu erläuternde Lockfunktion eingesetzt werden kann, wobei bei der Lockfunktion die Antriebsstrangverbindung vom Elektromotor zur Werkzeugaufnahme entsprechend zu unterbrechen ist.

Die Umschaltungen zwischen den beiden Gängen, konkret ausgedrückt also die axiale Gleitverschiebung des Zahnrad- oder Getriebeblocks 19 auf der Spindel 16 längs der Keilnuten erfolgt, wie dies bei solchen 2-Gang-Maschinen gelegentlich der Fall ist, dadurch, daß von einem äußeren, manuell zu betätigenden Drehgriffelement oder Drehknopf 20 ein exzentrisch gelagerter Stift ausgeht, der in eine Ringnut am Zahnradblock eingreift.

Bei dem dargestellten Ausführungsbeispiel ist in verfeinerter Ausführungsform noch ein Zwischenglied vorgesehen in Form einer Übertragungsscheibe 21, die drehbar in einem Ausschnitt 22 (Fig. 3) des Getriebegehäuses 12 gelagert ist und in der Zeichenebene nach unten mit einem Stellstift 23 in die Verstellnut 24 zwischen den beiden Zahnrädern des Zahnradblocks 19 eingreift.

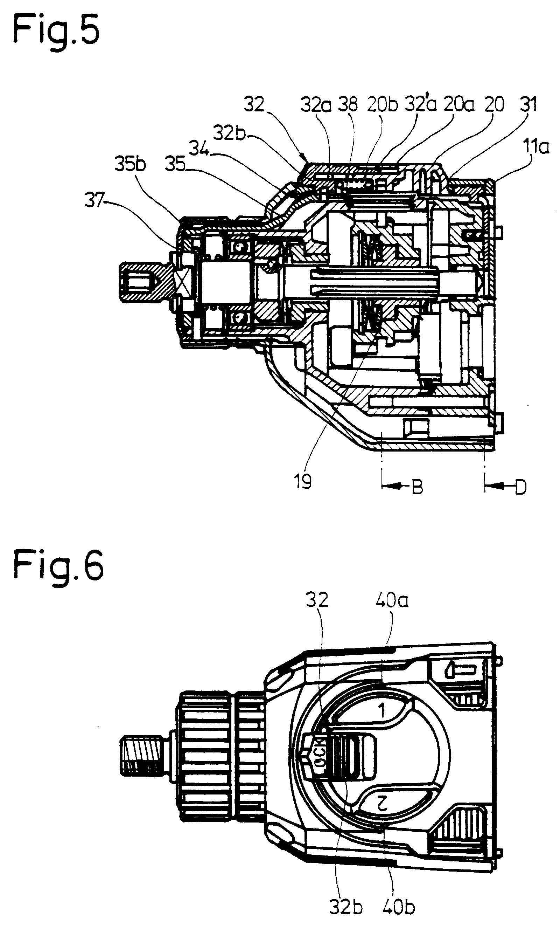

Angetrieben wird die Zwischenscheibe 21, die mittels eines zentralen Lagerzapfens 25 den manuellen Drehknopf 20 lagert, von diesem über eine exzentrische Führung, bestehend aus einem achsversetzten Mitnahmezapfen 26, der in eine entsprechend exzentrische Mitnahmeöffnung 27 am Drehknopf 20 eingreift. Der Drehknopf 20 selbst ist in geeigneter Weise in einer runden Ausnehmung 31 (Fig. 5) des äußeren Gehäuses 11 gehalten, wobei diese Ausnehmung bei dem dargestellten Ausführungsbeispiel allerdings von einem separaten Gehäuseeinsatz 11a gebildet ist, der mit dem äußeren restlichen Kunststoffgehäuse 11 des dargestellten Getriebeteilmoduls über geeignete Nut/Federverbindungen verbunden ist.

An sich kann der Drehknopf 20 lediglich von unten in die Aufnahmeöffnung 31 der Gehäuseteilabdeckung 11a eingesetzt sein, wobei ein radialer Ringvorsprung 28 innen am Drehknopf 20 diesen gegen ein Herausfallen sichert.

Der Drehknopf 20 kann nach außen in beliebiger Weise gestaltet sein; wie die Draufsichten der Figuren 2, 4 und 6 zeigen, sind durch vorspringende Rippen 29a, 29b bzw. durch flächenhafte Absenkungen 30a, 30b Griffmulden gebildet, die ein leichtes Verdrehen des Drehknopfes 20 ermöglichen, und man erkennt, daß, je nachdem, in welcher Winkelposition der Figuren 2 und 4 sich der Drehknopf 20 befindet, entweder der 1. Gang entsprechend Fig. 1 oder der 2. Gang entsprechend Fig. 3 eingeschaltet ist.

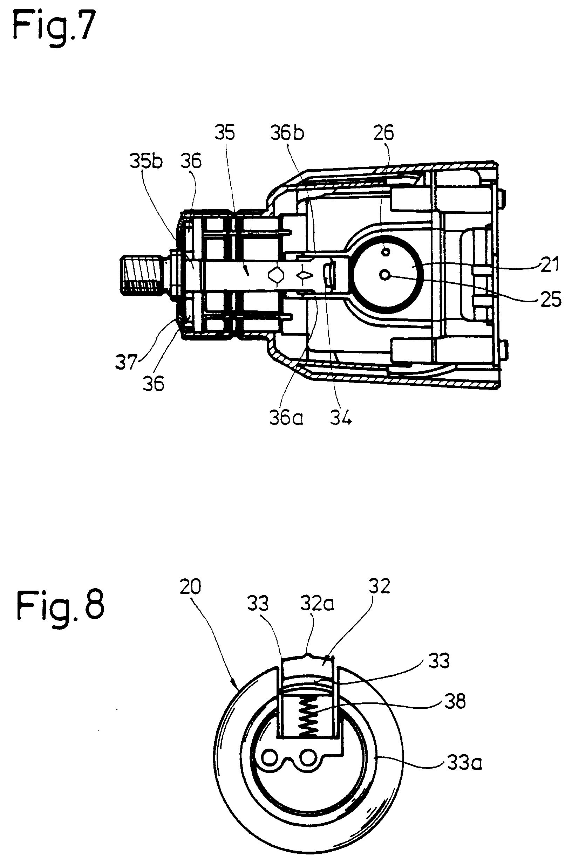

Der erforderliche Funktionszusammenhang zwischen der Gangumschaltung und der Realisierung der Lockfunktion ist dadurch gewährleistet, daß der Drehknopf 20, wie am besten die Figuren 5 und 6 in Verbindung mit der Fig. 8 zeigen, ein Stellglied für die Lockfunktion lagert, nämlich einen Schieber 32, der eine Gleitbewegung relativ zum Drehknopf 20 in radialer Richtung durchzuführen imstande ist.

Die Aufnahme und Lagerung des Schiebers 32 am bzw. im Drehknopf 20 kann an sich beliebig sein, bei dem dargestellten Ausführungsbeispiel ist der Schieber 32 von einem rechteckförmigen Ausschnitt 33 im Stellknopf 20 (Fig. 8) aufgenommen, wobei Führungskanten und gegenseitige Vorsprünge für seine radiale Verschiebbarkeit sorgen können.

Die in den Figuren 5 und 6 dargestellte spezielle Ausführungsform weist einen im vorderen Bereich U-förmig auf sich selbst zurückgebogenen Schieber auf, dessen oberer, nach außen zur manuellen Betätigung freiliegender Schenkel 32a mit einer rückwärtigen Verlängerung 32a' in einer Aufnahmetasche 20a des Drehknopfes 20 gleitet, während der untere Schenkel 32b des Schiebers zwei Aufgaben erfüllt, nämlich die Umfassung eines vom oberen Schenkel 32a abgedeckten Lagervorsprungs 20b des Drehknopfes 20, wodurch der Schieber zusätzlich sicheren Halt gewinnt, sowie die Bildung einer nach unten offenen Aufnahmenut 33 (Fig. 8), in welche eine Haltenase 34 eines zungenartig und mehrfach abgebogenen, nach vorn verlaufenden Arretiergliedes 35 für die Spindelwelle eingreift.

Die Fig. 7 zeigt deutlicher, daß dieses Arretierglied 35, welches im folgenden auch als Blockierzunge bezeichnet werden kann, gleitverschieblich längs beidseitiger Führungen 36a, 36b auf der Oberfläche des Aludruckgußgehäuses des Getriebes gelagert und mit einer vorderen Arretierspitze 35b bis zu einer Blockierposition für die Spindel geführt ist Je nach axialer Relativposition der Blockierzunge greift dann die Arretierspitze 35b in Ausnehmungen 36 einer kragenartig ausgebildeten Schürze 37 an der Spindel 16 ein, die mit dieser drehfest verbunden ist und gleichzeitig auch die Aufgabe erfüllt, die Austrittsöffnung der Spindel aus Getriebe- bzw. äußerem Kunststoffgehäuse abzudichten. Selbstverständlich kann der Eingriff auch in ein sonstiges, sich drehendes (Spindel)Teil erfolgen.

In den Figuren 5 und 6 sowie 7 ist die Blockierposition für die Spindel dargestellt, wobei gleichzeitig erkennbar wird, daß sich in diesem Falle der Zahnradblock 19 in einer mittleren Leerlaufposition befindet, in welcher die an der Gangschaltung bzw. an der Weiterleitung des Drehmoments beteiligten Getriebekomponenten außer Eingriff sind.

In bevorzugter Ausgestaltung der Erfindung befindet sich daher die Drehposition, in welcher die Lockfunktion über die Schieberverstellung durch Eingriff des zungenartigen Arretiergliedes 35 erfolgt, zwischen den beiden Schaltstellungen für den 1. bzw. den 2. Gang, wobei diese Ausführungsform natürlich nur für eine 2-Gang-Maschine gilt, da bei dieser der Zahnradblock 19 notwendigerweise in eine mittlere Leerlaufposition zu bringen ist, bevor ein erneuter Eingriff der Zahnräder durch weiteres Verschieben in einer entsprechenden Richtung stattfindet. Diese Leerlaufposition bzw. eine jeweils unterbrochene Getriebeposition wird zur Realisierung der Lockfunktion ausgenutzt, wobei entsprechend einem bevorzugten Ausführungsbeispiel der Übergang in die Lockfunktion auch selbständig erfolgen kann, wenn, wie bei dem dargestellten Ausführungsbeispiel, der Schieber 32 federvorgespannt in seiner Aufnahmeöffnung 33 am Drehknopf 20 sitzt. Hierzu ist eine Druckfeder 38 vorgesehen, die den Schieber 32 ständig radial nach außen zu drücken trachtet.

Dabei ist die Lagerung des Schiebers am Drehknopf 20 und in Verbindung mit der vom Gehäuse gebildeten Aufnahmeöffnung 31 für den Drehknopf 20 so getroffen, daß der Schieber sich aus seiner radial inneren, also zurückgezogenen Lagerposition am bzw. im Drehknopf 20 nur dann nach außen verschieben und so dem Druck seiner Vorspannungsfeder 38 folgen kann, wenn der Drehknopf 20 eine bestimmte Winkelorientierung aufweist, die der Leerlaufposition des Zahnradblocks 19 entspricht und in welcher auch das Gehäuse eine der Schiebergröße angepaßte radial nach außen verlaufende Ausnehmung 39 aufweist. Nur in dieser Winkelposition, die in den Figuren 5 und 6 dargestellt ist, kann sich der Schieber radial nach außen aus dem Drehknopf 20 herausschieben, wobei diese Stellbewegung bei dieser Winkelposition des Drehknopfes 20 einer axial nach vorn in Richtung auf die Werkzeugaufnahme verlaufenden Axialverschiebung entspricht, in welcher durch den Eingriff der Haltenase 34 die Blockierzunge axial nach vorn verschoben und insofern selbsttätig die Lockfunktion aktiviert wird.

In allen anderen Winkelpositionen ist ein radiales Nach-außen-Wandern des Schiebers 32 aufgrund der formschlüssigen Blockade durch die Gehäuseumrandung des Knopfes 20 ausgeschlossen, so daß für alle anderen Winkelpositionen, in welcher Getriebeverbindungen bestehen können, eine Aktivierung der Lockfunktion unmöglich ist.

Da der Schieber 32 im Drehknopf 20 gelagert ist und dessen Drehbewegung mitmacht, wird sich die Aufnahmenut 33 für die Haltenase 34 bei Gangumschaltungen notwendigerweise aus der Haltenasenposition wegdrehen; damit hier keine Blockierungen auftreten und im übrigen auch sichergestellt ist, daß die Blockierzunge nicht versehentlich nach vorn rutscht, setzt sich die Aufnahmenut 33 als ringförmig umlaufende Haltenut 33a an der Unterseite des Drehknopfes 20, so wie dies Fig. 8 zeigt, fort, wobei Aufnahmenut 33, die in Wirklichkeit einem Kreissegment folgend verläuft, und Haltenut 33a, bündig ineinander übergehen, wenn sich der Schieber nicht in seiner radial ausgefahrenen Lockposition befindet.

Um aus der Lockposition in eine Schaltstellung für den 1. oder 2. Gang zu gelangen, braucht der Benutzer lediglich den Schieber 32 aus der in Fig. 6 gezeigten Position gegen Federdruck radial nach innen zurückzuschieben, was problemlos möglich ist. Durch diese nach rückwärts gerichtete Gleitbewegung des Schiebers werden die beiden auf der Unterseite befindlichen Nuten 33 und 33a von Schieber und Drehknopf zueinander ausgerichtet, und der vordere Teil des Schiebers wird aus der Ausnehmung 39 des Gehäuses zurückgeholt. In dieser Position ist dann eine Verdrehung des Drehknopfes 20 in die eine oder andere Gangschaltstellung problemlos möglich.

Damit bei dieser Drehbewegung von der ständig gegen Federdruck nach außen gedrückten Vorderrandfläche des Schiebers 32 an der Innenwandung der Gehäuseausnehmung keine zu große Reibung verursacht wird, kann der Schieber vorn in eine reibungsarme Spitze 32a übergehen; ferner können Nocken, Quernuten, Griffmulden oder eine Riefelung 32b am Schieber noch vorgesehen sein zur Erleichterung von dessen Handhabung.

Die reibungsarme Spitze 32a an der vorderen Randfläche des Schiebers 32 dient ferner in vorteilhafter Weise noch als Rastnase, indem sie in den beiden Gang-Schaltstellungen in entsprechende, spitz zulaufende Rastausnehmungen 40a, 40b am Gehäuse, in diesem Fall einander gegenüberliegend, einrastet, wodurch eine formschlüssige Verrastung der jeweiligen Schaltstellung für den entsprechenden Gang erfolgt. Da sowohl die Rastausnehmungen 40a, 40b am Gehäuse als auch die Rastspitze 32a des Schiebers beidseitig als Schrägflächen ausgebildet sind, ist ein Herausdrehen aus diesen Positionen für die Schaltstellung 1. und 2. Gang auch ohne Zurückziehen des Schiebers möglich; im Gegensatz zur Position der Lockfunktion, wo der Schieber bewußt in seine Ausgangsposition zurückgeschoben werden muß, wenn man beabsichtigt, mittels des Schaltknopfes 20 in die Getriebe-Schaltposition einzugreifen.

## Patentansprüche

1. Elektrowerkzeug, insbesondere Elektrohandwerkzeug wie Handbohrmaschine, Mehrganghandbohrmaschine, Bohr- und Schlaghammer, Schrauber u. dgl., mit einer Schaltvorrichtung zur Arretierung der Werkzeugspindel (16), anders genannt Lockfunktion, durch formschlüssigen Eingriff, wobei ein von außen zugänglicher, manuell verstellbarer Drehknopf (20) am Werkzeuggehäuse (11, 11a) eine eine Leerlaufposition in der Getriebeverbindung bestimmende Winkelstellung aufweist und die Einstellung der Lockfunktion geometrisch formschlüssig zwangssynchronisiert ist auf die durch die Leerlaufposition bewirkte Drehmomentunterbrechung zwischen antreibendem Elektromotor und Werkzeugspindel, dadurch gekennzeichnet, daß der Drehknopf (20) einen selbst zusätzlich bei dieser die Leerlaufposition bestimmenden Winkelstellung in radialer Richtung in eine Spindelarretierposition bewegbaren Schieber (32) lagert, in welcher ein vom Schieber (32) angetriebenes Arretierglied (35) die Spindeldrehbewegung arretiert.

2. Elektrowerkzeug nach Anspruch 1, dadurch gekennzeichnet, daß das Arretierglied (35) die Form einer länglichen, gegen seitliche Bewegung formschlüssig von Gehäusebereichen gelagerten Blockierzunge aufweist, die mit einer vorderen Arretierspitze (35) in der axial ausgefahrenen Position des Arretierglieds in Ausnehmungen einer mit der Werkzeugspindel (16) drehfest verbundenen Schürze (37) eingreift.

3. Elektrowerkzeug nach Anspruch 1 oder 2, dadurch gekennzeichnet, daß der Drehknopf (20) der Umschaltung eines Getriebezahnradblocks (16) aus einer ersten Gangschaltstellung in eine zweite Gangschaltstellung und umgekehrt mit Hilfe exzentrischer Stellzapfen (23, 26) dient, wobei der Drehknopf (20) in einer der Leerlaufposition entsprechenden Position des Zahnradblocks (19) die die Verschiebebewegung des Schiebers (32) ermöglichende Winkelstellung aufweist.

4. Elektrowerkzeug nach Anspruch 1, dadurch gekennzeichnet, daß der Schieber (32) zur Bewirkung der Spindelarretierung im Drehknopf (20) radial nach außen federvorgespannt gelagert ist und in der die Leerlaufposition bestimmenden Winkelstellung des Drehknopfes (20) in eine die Schieberbewegung freigebende Gehäuseausnehmung (39) übertritt und durch diese radial nach auswärts gerichteten Bewegung das Arretierglied (35) mitnimmt.

5. Elektrowerkzeug nach Anspruch 3, dadurch gekennzeichnet, daß zur Gangumschaltung an einem inneren Getriebegehäuse (12) eines Getriebeteilmoduls eine Übertragungsscheibe angeordnet ist, die mit einem Stellstift (23) in eine Nut des Zahnradblocks (19) zu dessen axialer Gangverschiebung eingreift und selbst mittels eines zentralen Lagerzapfens (25) den Drehknopf (20) in seiner Lagerausnehmung (31) am äußeren Werkzeuggehäuse (11) zur Durchführung einer Drehstellbewegung lagert, wobei die Verdrehung der Übertragungsscheibe (31) durch einen achsversetzten Mitnahmezapfen (26) erfolgt, der in eine Mitnahmeöffnung (27) des Drehknopfes (20) eingreift, wobei die Position von Stellstift (23) und Mitnahmezapfen (26) so auf die Gehäuseausnehmung (39) des Werkzeuggehäuses (11) für den Schieber (32) bezogen ist, daß sich der Zahnradblock (19) dann in einer Leerlaufposition befindet, wenn der Schieber (32) auf die Gehäuseausnehmung (39) ausgerichtet ist.

6. Elektrowerkzeug nach Anspruch 4 oder 5, dadurch gekennzeichnet, daß das Arretierglied (35) mit einer Haltenase (34) in eine Aufnahmenut (33) auf der Unterseite des Schiebers (32) eingreift, die sich als Haltenut (33a) ringförmig auf der Drehknopfunterseite fortsetzt, wobei Aufnahmenut (33) und Haltenut (33a) dann bündig ineinander übergehen, wenn der Schieber (32) sich in seiner gegen Federdruck zurückgezogenen Ausgangsposition befindet.

7. Elektrowerkzeug nach Anspruch 4, dadurch gekennzeichnet, daß einer beidseitig winklig zulaufenden Rastspitze (32a) an der Vorderrandfläche des Schiebers (32) in den beiden Gangpositionen jeweils entsprechend komplementäre Gehäuseausnehmungen (40a, 40b) für die Schaltstellung-Rastung zugeordnet sind.

## Claims

1. An electric tool, in particular an electric hand tool such as a hand drill, a multiple-speed hand drill, a hammer drill, a screwdriver and the like, with a switching device for locking the tool spindle (16), also called a locking function, by engagement with positive locking, wherein a manually adjustable rotary knob (20) - accessible from the outside - on the tool housing (11, 11a) has an angular setting which determines an idling position in the gearing connexion, and the setting of the locking function is forcibly synchronized geometrically with positive locking with the torque interruption produced by the idling position between the driving electric motor and the tool spindle, **characterized in that** the rotary knob (20) supports a slide (32) itself additionally movable - in this angular setting which determines the idling position - in the radial direction into a spindle-locking position in which a locking member (35) driven by the slide (32) locks the rotational movement of the spindle.

2. An electric tool according to Claim 1, **characterized in that** the locking member (35) is in the form of an elongate blocking tongue which is supported with positive locking by areas of the housing so as to prevent lateral movement and which engages by a front locking point (35) in the axially extended position of the locking member into recesses in an apron (37) connected in a rotationally fixed manner to the tool spindle (16).

3. An electric tool according to Claim 1 or 2, **characterized in that** the rotary knob (20) is used to switch a gearing cluster gear (16) [*sic*] from a first gear setting into a second gear setting and *vice versa* with the aid of eccentric setting pins (23, 26), wherein the rotary knob (20) has the angular setting permitting the displacement movement of the slide (32) in a position of the cluster gear (19) corresponding to the idling position.

4. An electric tool according to Claim 1, **characterized in that** the slide (32) is mounted pre-stressed by a spring radially outwards in the rotary knob (20) so as to lock the spindle and, in the angular setting of the rotary knob (20) determining the idling position, so that it passes into a housing recess (39) which releases the slide movement and entrains the locking member (35) by this movement directed radially outwards.

5. An electric tool according to Claim 3, **characterized in that** for switching the gear a transmission disc is mounted on an inner housing (12) of a transmission module, the transmission disc engaging by a setting pin (23) in a groove in the cluster gear (19) for axially displacing the gear thereof and itself supporting - by means of a central bearing pin (25) - the rotary knob (20) in its mounting recess (31) in the outer tool housing (11) in order to perform a rotary setting movement, wherein the transmission disc (31) [*sic*] is rotated by an axially offset entrainment pin (26) which engages in an entrainment opening (27) in the rotary knob (20), wherein the setting pin (23) and the entrainment pin (26) are positioned in such a way with respect to the recess (39) of the tool housing (11) for the slide (32) that the cluster block (19) is in an idling position when the slide (32) is orientated towards the housing recess (39).

6. An electric tool according to Claim 4 or 5, **characterized in that** the locking member (35) engages with a retaining projection (34) in a receiving groove (33) in the underside of the slide (32), the receiving groove (33) being continued as a retaining groove (33a) in an annular manner in the underside of the rotary knob, wherein the receiving groove (33) and the retaining groove (33a) pass into each other in alignment when the slide (32) is in its starting position retracted against the pressure of a spring.

7. An electric tool according to Claim 4, **characterized in that** an engagement point (32a) converging at an angle on both sides on the front edge face of the slide (32) has associated therewith in the two gear positions suitably complementary respective recesses (40a, 40b) in the housing for the switching-setting engagement.

## Revendications

1. Outil électrique, en particulier outil électrique à main tel qu'une perceuse à main, une perceuse à main à plusieurs vitesses, une perceuse à percussion, une visseuse ou analogue, d'un dispositif de commande pour verrouiller la broche d'outil (16) en d'autres termes une fonction de verrouillage, par venue en prise par engagement par la forme, un bouton tournant (20) sur le carter de l'outil (11, 11a), accessible de l'extérieur, que l'on peut régler manuellement, présentant une position angulaire qui détermine une position de marche au ralenti dans le mécanisme de transmission et l'établissement de la fonction de verrouillage étant obligatoirement synchronisé de façon géométrique par engagement par la forme sur l'interruption du couple provoquée par la position de ralenti entre le moteur électrique d'entraînement et la broche de l'outil,
caractérisé en ce que
le boulon tournant (20) supporte un poussoir (32) mobile dans une position de blocage de la broche dans le sens radial même de façon additionnelle lors de cette position angulaire déterminant la position de ralenti, position de blocage de la broche dans laquelle un organe de blocage (35) entraîné par le poussoir (32) bloque le mouvement de rotation de la broche.

2. Outil électrique selon la revendication 1,
caractérisé en ce que
l'organe de blocage (35) présente la forme d'une languette de blocage longitudinale, montée par engagement de forme de zones du carter contre tout mouvement latéral, languette de blocage qui vient en prise avec une pointe de blocage antérieure (35) dans la position axialement déployée de l'organe de blocage dans des évidements d'une jupe (37) reliée de façon solidaire en rotation avec la broche d'outil (16).

3. Outil électrique selon la revendication 1 ou 2,
caractérisé en ce que
le bouton tournant (20) sert à faire passer un bloc (16) de roues dentées de la transmission d'une première position d'enclenchement à une deuxième position d'enclenchement et inversement à l'aide de tenons excentrés de réglage (23, 26), le bouton tournant (20) présentant dans une position correspondant à la position de ralenti du bloc de roues dentées (19) la position angulaire qui permet le mouvement de translation du poussoir (32).

4. Outil électrique selon la revendication 1,
caractérisé en ce que
le poussoir (32) est monté de façon à provoquer le blocage de la broche dans le bouton tournant (20) radialement vers l'extérieur en étant comprimé par un ressort et en ce qu'il passe dans la position angulaire qui détermine la position de marche au ralenti du bouton tournant (20) dans un évidement du carter (39), libérant le mouvement du poussoir et entraîne l'organe de blocage (35) par ce mouvement dans le sens radial vers l'extérieur.

5. Outil électrique selon la revendication 3,
caractérisé en ce que
l'on dispose pour changer de vitesse sur un carter intérieur de transmission (12) d'un module de partie de transmission un disque de transmission, qui vient en prise avec une tige de réglage (23) dans une rainure du bloc d'engrenages (19) pour la translation axiale de sa vitesse et même supporte au moyen d'un tourillon central (25) le bouton tournant (20) dans son évidement (31) sur le carter extérieur de l'outil (11) pour effectuer un mouvement de réglage rotatif, la rotation du disque de transmission (31) ayant lieu par un téton d'entraînement (26) déporté axialement, qui vient en prise dans une ouverture d'entraînement (27) du bouton tournant (20), la position de la tige de réglage (23) et du téton d'entraînement (26) étant calculée par rapport à l'évidement du carter de l'outil (11) pour le poussoir (32) d'une manière telle que le bloc d'engrenages (19) se trouve alors dans une position de marche au ralenti, quand le poussoir (32) est dirigé sur l'évidement du carter (39).

6. Outil selon les revendications 4 ou 5,
caractérisé en ce que
l'organe de stockage (35) vient en prise avec le bec d'arrêt (34) dans une gorge de réception (33), sur la face inférieure du poussoir (32), qui se continue en une gorge d'arrêt (33a) de forme annulaire sur la face inférieure du bouton tournant (20), la gorge de réception (33) et la gorge d'arrêt (33a) se confondant à fleur l'une dans l'autre, quand le poussoir (32) se trouve dans sa position de départ se repliant contre la pression d'un ressort.

7. Outil selon la revendication 4 ou 5,
caractérisé en ce qu'
on associe à une pointe d'encliquetage (32a) arrivant des deux côtés à angle droit sur le bord antérieur du poussoir (32) dans les positions de deux vitesses respectivement des évidements du carter (40a, 40b) complémentaires de façon correspondante pour l'encliquetage en position de marche.
